Europäisches Patentamt

European Patent Office

Office européen des brevets

(11) Publication number: **0 077 294**
**B1**

(12) **EUROPEAN PATENT SPECIFICATION**

(45) Date of publication of patent specification: **16.04.86**

(21) Application number: **82810404.2**

(22) Date of filing: **29.09.82**

(51) Int. Cl.⁴: **B 01 J 8/24,** B 01 J 8/32,
F 23 C 11/02

(54) **Superjet gas agitation process.**

(30) Priority: **09.10.81 US 309937**

(43) Date of publication of application:
**20.04.83 Bulletin 83/16**

(45) Publication of the grant of the patent:
**16.04.86 Bulletin 86/16**

(84) Designated Contracting States:
**BE DE FR GB IT**

(56) References cited:
**EP-A-0 033 808**
**FR-A-2 328 507**
**US-A-3 136 705**
**US-A-4 103 646**
**US-A-4 176 623**

(73) Proprietor: **BATTELLE DEVELOPMENT
CORPORATION
505 King Avenue
Columbus Ohio 43201 (US)**

(72) Inventor: **Arbib, Herbert A., Dr.
2965 Barclay Square South
Columbus Ohio 43209 (US)**

(74) Representative: **Dousse, Blasco et al
7, route de Drize
CH-1227 Carouge/Genève (CH)**

Courier Press, Leamington Spa, England.

Description

The invention relates to an improved method of operating a multisolid fluid bed system such as that disclosed in U.S. Patent 4,084,545. It also discloses a reactor for carrying out this method. In the prior system, a fine particle component is entrained in a reactor and a coarse particle component is fluidized at the same time in a smaller region at the bottom of the entrained bed. The fine particles are then recycled out the top of the reactor and back through the coarse fluidized bed at the bottom. This multisolid system results in good particle interaction and increased residence times over single bed reactors for reactants introduced therein. The coarse and fine particles are typically not reactants and are generally physically and chemically stable such that they may remain in the reactor for an extended period of time. Fluidizing gas enters at the bottom through a conventional perforated distributor plate providing rather uniform fluidization of the coarse particles across the bed. A settled coarse particle depth of at least about 25 centimeters has been preferred in the prior system for good fluidization and high residence times.

As used herein, the terms fluid agitation reactor and a fluid agitation process are used generically to refer to any apparatus and method for suspending, transporting, or contacting a particulate in an upwardly moving fluid medium. The solid particles may be fluidized, entrained or spouted. In general, fluid agitation processes utilizing one-component, fluidized, entrained or spouted beds of particulates are known in the art. The above-mentioned patent utilizes both an entrained bed and a fluidized bed. However, until the present invention, adequate lateral mixing and high residence times at low pressure drops in fluid agitation reactors have not been obtainable, to the disadvantage of the technology vis a vis other means for combustion and gasification, for example.

Summary of the invention

It is an object of the present invention to provide a method of operating a fluid agitation reactor. Reactors operated according to the inventive fluid agitation method may be utilized for a variety of processes, from simple heat exchange reactions through catalytic reactions and complex chemical reactions. We will predominantly describe the method in connection with our preferred use, which is the combustion of carbonaceous materials, particularly high-sulfur coal and petroleum coke.

It is a further object of the invention to provide an improved fluid agitation process utilizing separate coarse and fine particle fractions in overlapping beds. The particles are caused to interact in such a way that the residence time for reactants is substantially increased, resulting in more complete reactions.

In particular, the invention as defined in claim 1 is a method for operating a multisolid fluid agitation reactor which comprises forming an entrained bed in a first region with a relatively fine first particle component, forming in a more limited region within the first region a dispersion of a relatively coarse second particle component preferably comprising a material having long-term physical stability in the fluid agitation process so as to be substantially non-agglomerating and not subject to substantial attrition therein, recycling the fine particles from the entrained bed through the dispersion of coarse particles, and introducing fluid media through at least one orifice forming a fluid jet capable of penetrating a settled bed of the coarse particles in the reactor and thereby forming the dispersion of coarse particles.

The fluid jet is produced by adjusting the fluid velocity in the orifice to a level at least equal to the jet penetration velocity of the coarse particles. The actual superficial velocity in the reactor (volume of fluid per unit time divided by the cross-sectional area of the reactor normal to the principal direction of fluid flow) may be either less than or greater than the comparable minimum fluidization velocity of the coarse particles, though it is preferably greater.

The fluid medium is preferably a gas and is preferably a reactant. The other reactant may be a solid particulate material, such as coal, which is preferably of such size that it does not settle out. The solid particulate reactant may be entrainable at the superficial velocity, and the inventive method provides high residence times necessary for substantially complete reaction even with such fine particles.

The solid particulate reactant may be a carbonaceous fuel in which case the fuel may, for example, be burned or gasified. Heat energy may be withdrawn by conveying a heat transfer medium through boiler tubes in the reactor or through a portion of the recirculation path whereby the fine particles transfer heat to the medium.

Description of the drawings

Figure 1 shows a prior art multisolid system with a fluidized bed of coarse particles and an entrained bed of relatively fine particles.

Figure 2 shows a coarse particle bed according to the invention wherein the fluid medium enters at a velocity not sufficient to completely penetrate the bed.

Figure 3 shows the dispersion of coarse particles which is produced in the reactor by application of the fluid media at a preferred velocity.

Figure 4 shows the combined interaction of the dispersion of Figure 3 with the fine particles of the entrained bed of the invention.

Figure 5 is an example of a reactor having four round orifices for practicing the invention.

Figure 6 is an embodiment of the reactor with rectangular orifices in place of the preferred round orifices.

Detailed description

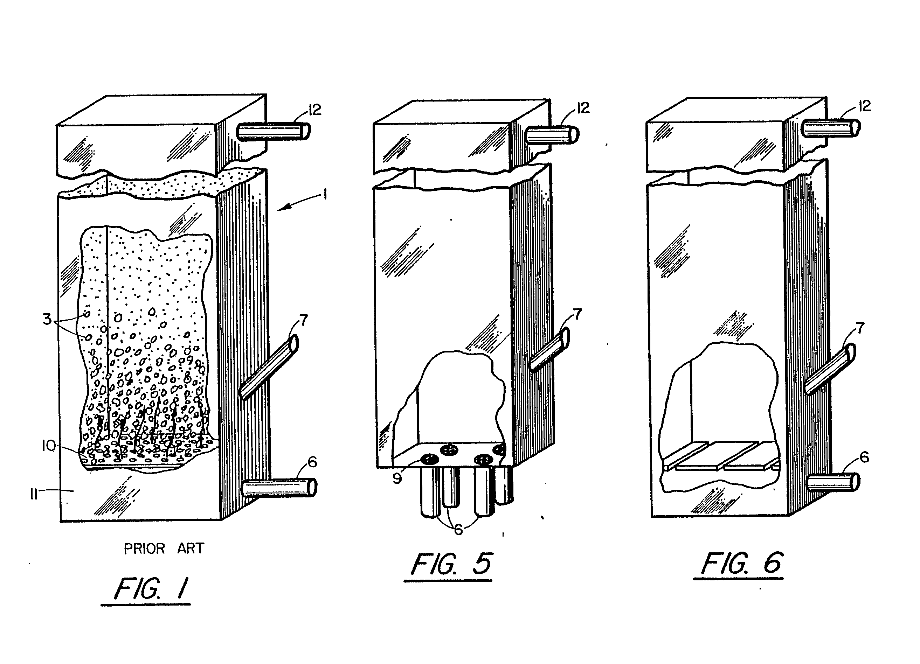

A prior art multisolid fluidized bed such as described in U.S. 4,084,545 is shown in Figure 1 but, for clarity, the particles are shown as less concentrated than normal. Fluidizing gas enters through conduit 6 into air plenum 11 and through distributor plate 10 having a plurality of holes therethrough. The fluidizing gas is introduced at a superficial velocity which will simultaneously fluidize the coarse particles 3 into a concentrated bed and entrain the fine particles throughout the reactor. The entrained particles may be removed through conduit 12 and recycled through conduit 7.

The distributor plate is conventionally designed to admit fluidizing gas substantially uniformly across the bed in order to encourage more uniform mixing and reaction across the bed. In the prior method, the quantity of coarse particles may be on the order of at least about 25 centimeters (settled bed depth), which is then fluidized at 6—9 m/sec superficial velocity in order to provide a deep and dense enough bed to produce residence times sufficient to complete reactions therein. The fluidized bed is typically a discrete region of suspended particles having a definite upper boundary above which the concentration of particles decreases greatly.

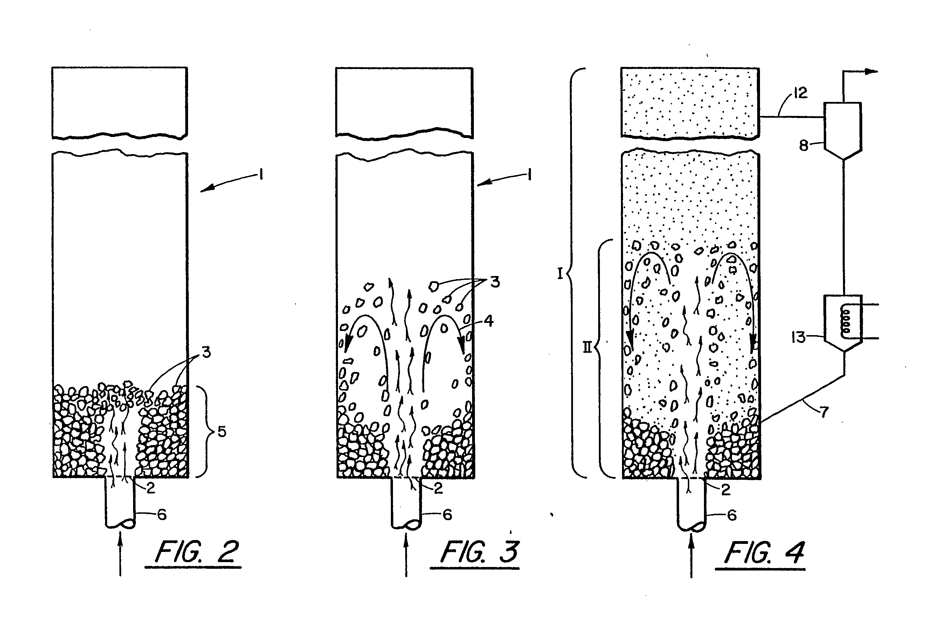

In contrast to the prior concentrated and deep, coarse particle beds, the present invention provides a multisolid fluid agitation reactor as defined in claim 14. The fluid media provide a very dilute, coarse particle dispersion such as shown in Figures 3 and 4. Surprisingly, this dispersion, using substantially less coarse particles than the prior method (preferably about 5—15 centimeters settled bed depth) promotes better interaction and residence times than the prior art bed when operated according to the invention. The lower bed depth and new distributor plate also contribute to a lower pressure drop and more economical operation. Moreover, whereas the gas velocity necessary to fluidize a particulate solid depends on several properties of the solid, including its density and particle size, it is not a function of the bed depth. To the contrary, the jet penetration velocity in the present invention depends on the bed depth and a desired change in fluid velocity may be accomplished without adversely affecting performance by altering bed depth. In the prior fluidization process this would not be possible and a new particulate may have to be used to accommodate the velocity change in order to prevent settling or entrainment of the original particulate.

The present method of starting up a multisolid system is graphically displayed in Figures 2—4 wherein a fluid agitation reactor 1 contains coarse particles 3 in a settled bed 5 (Figure 2). A fluid medium (preferably a gas) enters through conduit 6 and orifice 2 at the minimum velocity which forms a fluid jet capable of penetrating the settled bed 5. Just under jet penetration velocity, the jet appears to form a hollow partial channel in the bed (Figure 2) and then, at the penetration velocity, the jet ejects coarse particles from the surface of the bed (Figure 3). The penetration velocity (the velocity in the jet itself) for this occurrence must at least equal the entrainment velocity of the coarse particles and is frequently greater depending on the bed properties. The superficial velocity (in the bed) is, of course, much lower due to the enlarged cross section and, contrary to the prior multisolid bed system, may even be lower than the comparable minimum fluidization velocity for the coarse particles.

The coarse particles form what we choose to identify as a dispersion of coarse particles. The dispersion is a very non-uniform, dilute suspension of particles in contrast to the uniform, concentrated fluidized beds of coarse particles in the prior method. As shown in Figure 3, a single, round orifice tends to form a dispersion of coarse particles which appears similar to a conventional spouted bed and which is not a classic bubbling, fluidized bed with a definite upper boundary of dramatic concentration change.

The dispersion is formed by jet penetration of the coarse settled bed. By the term jet or fluid jet, we retain the conventional definition of a strong, well-defined stream of fluid, either gas or liquid, issuing from a nozzle or orifice and having a fluid flow path of at least several diameters in length.

The dispersion is formed when the coarse particles are temporarily entrained in the fluid jet until the fluid velocity in the jet drops to less than the entrainment velocity of the coarse particles and the particles are deflected outward from the jet into a surrounding region. When the particles are expelled to a lower velocity region, they fall until again contacting a jet of upward moving fluid of sufficient velocity. As shown in Figure 3, for a single orifice, the device particles tend to be expelled in a fountain-shaped dispersion to the outside of the reactor where the upward movement of gas is insufficient to support the particles. From there, the particles fall and then recycle back to the orifice or jet. In a reactor with multiple orifices, the particles would be deflected to the outside of each jet and rain down between jets.

In practicing the inventive method, the jet penetrates the settled bed of dense particles and ejects some of the particles, whenafter the fine particles may be injected into the reactor such as shown in Figure 4. Their presence improves the buoyancy of the dense particles and increases the interstitial velocity of the fluid media between particles such that the depth of the coarse particle dispersion is raised substantially and a highly interactive multisolid bed is created, even at superficial velocities below the comparable minimum fluidization velocity of the dense bed particles. The fluid medium is provided at such rate that the flow particles are entrained in the region I, substantially throughout the reactor, and the coarse particles form the expanded dispersion in the more limited region II. And although the superficial velocity exceeds the entrainment velocity of the fine particles whereby they are eventually entrained out the top of the reactor, the dispersion of coarse particles stabilizes the fine particles such that region II resembles an expanded, interactive fluidized bed with a clearly identifiable upper boundary. The concentration of the fine particles and interaction and residence times are increased by surprising amounts given the dilute nature of the coarse dispersion.

Fine particles are recycled through conduit 12, cyclone 8, external heat exchanger 13, and conduit 7 back through the dispersion in region II. Since the gas velocity in the orifice as well as the density of the gas/fine particle mixture both affect the buoyancy of dense particles, the amount of fine particle recycle can be used to trade-off with the gas velocity in producing optimum operation. For example, if recycle is increased, the gas velocity may be "turned down" to slow a reaction, without significantly affecting the efficiency of the interaction or residence time in the more limited region II (as long as the coarse-particle entrainment velocity is exceeded in the orifice).

The residence time of reactants and the pressure drop through the reactor are two properties which critically affect the efficiency and economics of a fluid agitation process. Looking at the prior multisolid bed which produces very good residence times compared with single fluidized beds, it might be reasonable to expect that deeper or more concentrated coarse-particle beds in region II would provide higher residence times and higher pressure drops and that shallow or disperse coarse-particle beds would decrease both residence times and pressure drops. Surprisingly, we have found that our shallow, dispersion of coarse particles may provide both equal or better residence times and lower pressure drops in the multisolid system.

The dispersion is produced by providing a distributor plate or nozzle having at least one orifice which forms a fluid jet of fluidizing media capable of penetrating a settled bed of the coarse particles in the reactor. To penetrate the bed, the velocity of the fluid in the orifice must at least equal the entrainment velocity of the coarse particles in the specific fluid medium. For example, the medium may be a gas containing solid particles, in which case the entrainment velocity may be lower than it would be for the gas alone. Above this minimum velocity, the capability of a jet to penetrate the settled bed and to thereby meet the condition of the inventive method may depend on many variables in addition to the fluid velocity in the orifice, such as the fluid density, the height of the settled bed, the size and density of the coarse particles, and the size of the orifice. And though we have not derived an absolute relationship which defines the jet penetration in terms of these variables, we believe that it is well witihn the state of the art to empirically design a system which provides a fluid jet capable of penetrating the settled coarse particle bed in the system and of thereafter forming the dispersion of coarse particles. In fact, prior researchers have derived equations which relate these variables in spouted beds, which may have some analogy to the coarse particle bed of the present system. For example, see Mathur and Gishler, A Technique for Contacting Gases with Coarse Solid Particles, AIChem EJ, [1], pg. 157 (1955).

For example, for a system utilizing a 24 cm diameter reactor and 0.635 cm average particle diameter alumina particles, we have found that a single orifice 5 cm in diameter can produce a fluid jet which penetrates a 15 cm settled bed of the particles at a velocity in the orifice of 33 m/sec (superficial velocity of 1.6 m/sec). At 48 m/sec in the orifice, a fountain-type coarse particle dispersion is produced such as shown in Figure 3.

The orifice is preferably a circular opening in a distributor plate but may also have any other shape which can produce a jet with the ability to penetrate the settled bed. One or more orifices may be necessary depending on the size of the reactor. Figures 5 and 6 show two particular embodiments for larger reactors.

The smaller dimension of the orifices (diameter of the round opening, width of a slit) are preferably much larger than the particle size of the coarse particles. (A screen may cover the orifice to prevent particles from filling the orifice when not fluidized). If the orifices are equal to or samller than the particles, the condition approaches that experienced in the prior method wherein the jet would not have the ability to penetrate the settled bed unless the bed was so shallow (e.g. a few layers of particles) or the velocity so high as to be impractical in the system.

When using multiple orifices in larger reactors, it is necessary to space them apart such that the coarse particles which are temporarily entrained or deflected outward by the fluid jets have space to freefall between adjacent jets, as well as along the wall of the reactor, back to the orifices at the bottom. Otherwise, the bed operates more as the fluidized bed of the prior method. The recycling motion of the dispersion has been found to benefit the particle interaction and reactant residence times. We prefer that the space between orifices be at least about four times their smaller dimension. It may also be desirable to construct low partitions or walls between adjacent orifices.

The coarse and fine particulate components preferably have high temperature physical and chemical stability, are substantially inert under the operating conditions and promote efficient mixing and heat transfer. Where oxidizing conditions prevail, the coarse and fine components preferably comprise metals or metal oxides such as iron oxide. One specific material which may be used as either component is a hematite ore, containing about 93% iron oxide, $Fe_2O_3$, and supplied under the trademark "Speculite" by C. E. Minerals, Inc., King of Prussia, Pennsylvania. The components may alternatively comprise nickel, nickel oxide, or alumina, for example. The coarse and fine components may, in some instances to be discussed below, comprise a reactant such as coke or shale. The fine component may also additionally comprise silica or a reactant such as limestone or dolomite under conditions wherein sulfur capture is desired.

It has been found that it is theoretically possible, though possibly difficult in practice, to use a reactant as a coarse or fine particle component. For example, the use of shale or oily rock which comprise hydrocarbons in a substantially inert solid residue may be used as the coarse component, and upon

4

attrition, as the fine fraction. Coal and coke have less residue but may still be used in the same manner. The reactants having a substantially inert residue are easier to incorporate into the method, but all of these reactants are difficult and require close control and planning in order to maintain the necessary coarse particle dispersion and recirculating entrained bed. In particular, the addition of fresh reactants and the removal of residue in the correct amounts to maintain the method are critical.

The particle size of the fine component particles is preferably in the range of about 105 to 1190 . $10^{-6}$ m (−16+140 U.S.) mesh while the coarser particles are preferably about 1/8-1 inch (0.3—2.5 cm) diameter for the reactors studied. Sizes may be increased in larger reactors. The particle sizes are selected as known in the art given the size of the reactor, the operating conditions and the characteristics of the solid separators used in connection with the system. The present method allows the use of broad range of particle sizes. However, the particle fractions should be chosen such that sensitivity to velocity changes (e.g., turn down capability) is not adversely affected. That is, if the difference in particle size between the coarse and fine fractions is too small, a minor variation in superficial velocity may result in a "single" component, circulating fluidized bed without the desired particle interaction.

The superficial velocity of the reactor may be very high compared with one bed systems but is preferably held in the range of about (20—40 ft/sec) 6.1—12.2 m/sec for efficient operation. An oxygen containing gas for oxidation reactions and a hydrogen containing gas for reducing reactions are preferred fluidizing media. The fluid media may also comprise a liquid or slurry, such as a coal slurry in the case of a liquifaction reaction.

The process may be used with the great variety of reactions now carried out in fluid beds. The preferred reaction is combustion and the preferred reactant is a particulate coal which can be fed to the coarse dispersion along with a finely divided sulfur sorbent such as limestone or dolomite. Lump coal and coal slurries may also be burned or partially burned according to the method. It has been found that reactant particles larger than the coarse particles may be buoyed by the interacting particles of the two beds. For example, large chunks of coal and shale at least about 5 cm in diameter may be burned in the process. Moreover, in conventional fluidized beds and, to a lesser extent, in the prior multisolid fluidized beds, the high concentration of coarse particles inhibit vertical and lateral motion of a coarse reactant. In the present coarse particle dispersion, there is little interaction between coarse particles which permits more unobstructed lateral and vertical motion of any coarse reactant such as lump coal.

Apparatus similar to that suggested by Figure 4 for practicing the method was constructed and operated to burn particulate coal. The reactor was about (10 inches) 25 cm in diameter and (20 feet) 6.1 m high. The distributor plate contained one orifice (1.4 inches) 3.5 cm in diameter. The coarse particles of (1/4 inch) 0.65 cm alumina were filled to a depth of (6 inches) 15.4 cm and could easily be penetrated by the fluid jet created by applying air pressure to the orifice at a velocity in the orifice of (259 ft/sec) 79 m/sec. The fine particle component was a 210—840 . $10^{-6}$ m −20+70 U.S. mesh silica sand. The results of a typical run are shown below:

| | |
|---|---|
| Coal Feed Rate | 44.5 kg/hr |
| Coal Size | 0.65—1.95 cm |
| Limestone Feed Rate | 20.5 kg/hr |
| Temperature Lower region II | (1536°F) 835°C |
| Upper region I | (1547°F) 841°C |
| Sulfur Retention | 96% |
| Combustion Efficiency | 95% |
| Calcium/Sulfur Mole Ratio | 3.5 |

Exmaple 1

An experiment was performed to demonstrate the effect of the dispersion of coarse particles on the residence time of the fine particles in the reactor. The (9.5 inch) 24 cm diameter reactor was used with a distributor plate having a single orifice 5.3 cm in diameter. A coarse particle component of (1/4 inch) 0.65 cm alumina beads and a fine particle component of 210—640 . $10^{-6}$ m −20+70 U.S. mesh silica sand comprised the dispersion and the entrained bed, respectively. The depth of the settled bed of coarse particles was (6 inches) 15.4 cm and at (20 ft/sec) 6.1 m/sec superficial velocity the settled bed was easily penetrated by the fluid jet from the single orifice. In starting up the reactor, the coarse particles were dispersed by application of fluid pressure through the orifice and the fine particles were then introduced above the distributor plate. During regular operation, the fine particles were removed out the top of the reactor, separated from the gas in a cyclone and recycled back through the coarse particle dispersion. The process was run at room temperature.

# 0 077 294

The average residence time of the fine particles in the reactor was measured at three different recycle rates. To determine the effect of the coarse particle dispersion on residence times, experimental runs were made under identical conditions but without the coarse particle dispersion. The results are shown in Table 1.

### TABLE 1

| Solids residence times with fluid jet distributor plate | | | |
|---|---|---|---|
| | Fine particle recirculation rate | | Fine particle residence time |
| | kg/hr/m² | (lb/hr/ft²) | (sec) |
| with coarse particle dispersion | 16750 | (3352) | 24.0 |
| | 45250 | (9047) | 27.0 |
| | 55000 | (10984) | 31.0 |
| without coarse particle dispersion | 15300 | (3057) | 8.4 |
| | 35000 | (6990) | 4.5 |
| | 59150 | (11830) | 4.4 |

It may be seen that a coarse particle bed only 6 inches (15.4 cm) deep can form a dispersion according to the invention which increases residence times by about 15—25 seconds over the range of experimental conditions.

For comparison with the same reactor and process conditions but with the prior art perforated plate type distributor (260—0.38 cm diameter holes) several runs were again made. The results in Table 2 show that residence times were increased only about one second with a dense fluidized bed under the conditions.

### TABLE 2

| Solids residence time with perforated distributor plate | | | |
|---|---|---|---|
| | Fine particle recirculation rate | | Fine particle residence time |
| | kg/hr/m² | (lb/hr/ft²) | (sec) |
| with coarse particle fluidized bed | 15570 | (3114) | 1.8 |
| | 26300 | (5258) | 1.7 |
| | 54750 | (10953) | 2.1 |
| without coarse particle fluidized bed | 15570 | (3114) | 0.1 |
| | 34800 | (6959) | 0.5 |
| | 73950 | (14787) | 1.2 |

The data also show relatively poor residence times for the perforated plate with a coarse particle dense bed versus the orifice plate with the coarse particle dispersion. The results are not indicative of optimum performance of the prior art processes but show the relative effect of adding a shallow, coarse particle bed. The poor residence times may be in part due to the use of large, dense, coarse particles which have been found to perform better with the orifice plate than with the perforated plate. However, it is also due to the settled bed depth which, in both cases, was (6 inches) 15.4 cm. Such depth is generally not sufficient for the perforated plate which functions better with at least about (10 inches) 25.4 cm of coarse particles. But even at equal coarse particle depths, the present invention has an economic advantage because of the ability to

6

operate at lower pressure drops through the reactor. In a test run in a (5.5 inch) I.D. 14 cm diameter reactor and with the same coarse and fine components as above, the data shown in Table 3 were measured. The pressure drop is the difference in the air pressure between a point above the distributor plate and a point near the top of the (20 foot) 6.1 m reactor.

TABLE 3

| Distributor | Fine particle recirculation rate (lb/hr/ft²) | kg/hr/m² | Pressure drop (inches of water) | mbar |
|---|---|---|---|---|
| single orifice | (5600) | 28000 | (2) | 482 |
| 3.5 cm dia. | (10600) | 53000 | (6) | 1446 |
| perforated plate | (2800) | 14000 | (7) | 1687 |
| 56—0.47 cm dia. holes | (7200) | 36000 | (13) | 3133 |
| | (13000) | 65000 | (13) | 3133 |

The settled bed depth of coarse particles was (6 inches) 15.4 cm in each case and the superficial velocity was (20 ft/sec) 6.1 m/sec. Simultaneous high residence time and low pressure drop are believed to be surprising advantages of the inventive process in view of the prior multisolid fluidization process.

## Claims

1. A method of operating a multisolid fluid agitation reactor, said multisolid involving separate coarse and fine particles in overlapping beds, comprising:
(A) forming an entrained bed of said fine particles and providing for the recycling thereof in the reactor;
(B) forming a dispersion of said coarse particles in a lower region of said reactor; characterized in
(C) introducing a stream of fluid by means at least one orifice in said reactor through said bed of coarse particles at a velocity at least equivalent to the entrainment velocity at said coarse particles thus providing to said dispersion a very non-uniform and dilute distribution, the said bed of fine particles being recycled through said dispersion.

2. The method of Claim 1 wherein the fluid comprises a gaseous reactant.

3. The method of Claim 1 wherein the orifice diameter is substantially greater than the diameter of individual coarse particles.

4. The method of Claim 1 wherein the coarse particles comprise a material stable in the gas agitation process.

5. The method of Claim 2 for reacting a solid, particulate material with said gaseous reactant comprising:
introducing the solid reactant into the reactor at a predetermined rate,
introducing the gas reactant at a rate established from said predetermined rate and stoichiometry of the reaction.

6. The method of Claim 5, wherein the solid reactant is a carbonaceous fuel.

7. The method of Claim 6, wherein said fluid is air or oxygen whereby the fuel is burned and the heat of combustion is recovered by passing a heat transfer medium through boiler tubes in contact with the fine particles.

8. The method of Claim 1 for combustion or gasification wherein the coarse particles comprise a carbonaceous fuel.

9. The method of Claim 8 wherein the coarse particles comprise coal, coke or oil shale.

10. The method of starting up a multisolid fluid agitation process involving separate fine particles and coarse particles in overlapping beds, comprising:
(A) forming a settled bed of the coarse particles in a gas agitation reactor,
(B) introducing a fluid through at least one orifice in the reactor and forming at least one fluid jet through said bed of coarse particles and providing very dilute and non-uniform dispersion of the coarse particles.
(C) forming an entrained bed of the fine particles, the dispersion of the coarse particles being included therein, and
(D) recycling the fine particles from said entrained bed through the dispersion of coarse particles.

7

# 0 077 294

11. The method of Claim 10 wherein the coarse particles essentially comprise a material stable against attrition in the process.

12. The method of Claim 11 wherein the coarse particles comprise a carbonaceous fuel.

13. The method of Claim 11 wherein the coarse particles comprise coal, coke or oil shale.

## Patentansprüche

1. Verfahren zum Betreiben eines Mehrfachfeststoff-Wirbelagitationsreacktors, wobei die Mehrfachfeststoffe getrennte grobe und feine Partikel in sich überlappenden Schichten umfassen mittels

(A) Bildens einer mitgerissenen Schicht aus diesen feinen Partikeln und Sorgens für das Wiederumlaufen derselben im Reaktor;

(B) Bildens einer Dispersion der groben Partikel in einem unteren Bereich des Reaktors, gekennzeichnet durch

(C) Einbringen eines Wirbelfluidstroms über wenigstens eine Öffnung in dem Reaktor durch die Schicht aus groben Partikeln hindurch mit einer Geschwindigkeit, die der Mitreißgeschwindigkeit der groben Partikel zumindest gleichwertig ist, so daß auf diese Weise der Dispersion eine sehr ungleichmäßige und schwache Verteilung auferlegt wird, wobei die Schicht aus feinen Partikeln durch die Dispersion im Kreislauf zurückgeführt wird.

2. Verfahren nach Anspruch 1, dadurch gekennzeichnet, daß das Wirbelfluid ein gasförmiges Reagens enthält.

3. Verfahren nach Anspruch 1, dadurch gekennzeichnet, daß der Öffnungsdurchmesser wesentlich größer als der Durchmesser von einzelnen groben Partikeln ist.

4. Verfahren nach Anspruch 1, dadurch gekennzeichnet, daß die groben Partikel einen im Gasagitationsprozeß beständigen Stoff enthalten.

5. Verfahren nach Anspruch 2 zum Umsetzen eines festen, aus Partikeln bestehenden Werkstoffs mit dem gasförmigen Reagens, gekennzeichnet durch Einbringen des Festen Reagens in den Reaktor mit einer vorbestimmten Rate und durch Einbringen des Gas-Reagens mit einer von der vorbestimmten Rate und der Stöchiometrie der Reaktion her gebildeten Rate.

6. Verfahren nach Anspruch 5, dadurch gekennzeichnet, daß das Feste Reagens ein kohlenstoffhaltiger Brennstoff ist.

7. Verfahren nach Anspruch 6, dadurch gekennzeichnet, daß das Wirbelfluid Luft oder Sauerstoff ist, wodurch der Brennstoff verbrannt wird und die Verbrennungswärme durch Führen eines Wärmeübergangsmediums durch Heizrohre in Berührung mit den feinen Partikeln rückgewonnen wird.

8. Verfahren nach Anspruch 1 oder Vergasung, dadurch gekennzeichnet, daß die groben Partikel einen kohlenstoffhaltigen Brennstoff enthalten.

9. Verfahren nach Anspruch 8, dadurch gekennzeichnet, daß die groben Partikel Kohlen-, Koks- oder Ölschiefer enthalten.

10. Verfahren zum Einleiten eines Mehrfachfeststoff-Wirbelagitationsprozesses, der getrennte feine Partikel und grobe Partikel in sich überlappenden Schichten umfaßt, bestehend aus

(A) Bilden einer gesetzten Schicht der groben Partikel in einem Gasagitationsreaktor;

(B) Einbringen eines Wirbelfluids über wenigstens eine Öffnung in dem Reaktor und Bilden wenigstens eines Wirbelstrahls durch die Schicht aus groben Partikeln hindurch und Schaffen einer sehr schwachen und ungleichmäßigen Dispersion der groben Partikel;

(C) Bilden einer miterissenen Schicht der feinen Partikel, wobei die Dispersion der groben Partikel darin eingeschlossen ist, und

(D) Wiederumlaufen der feinen Partikel aus der mitgerissenen Schicht durch die Dispersion von groben Partikeln hindurch.

11. Verfahren nach Anspruch 10, dadurch gekennzeichnet, daß die groben Partikel im wesentlichen einen Stoff enthalten, der im Prozeß beständig gegen Verschleiß ist.

12. Verfahren nach Anspruch 11, dadurch gekennzeichnet, daß die groben Partikel einen kohlenstoffhaltigen Brennstoff enthalten.

13. Verfahren nach Anspruch 11, dadurch gekennzeichnet, daß die groben Partikel Kohlen-, Koks- oder Ölschieer enthalten.

## Revendications

1. Procédé relatif au fonctionnement d'un réacteur à multisolides et agitation de fluide, ces multisolides comprenant des particules grossières et fines séparées faisant partie de lits superposés, suivant lequel

(A) on forme un lit entraîné desdites particules fines et on fait en sorte de les recycler dans le réacteur;

(B) on forme une dispersion desdites particules grossières dans une région inférieure du réacteur; caractérisé en ce que

(C) on introduit un courant de fluide par au moins un orifice dudit réacteur à travers ledit lit de particules grossières à une vitesse au moins égale à la vitesse d'entraînement desdites particules grossières, impartissant ainsi à cette dispersion une distribution très non-uniforme et diluée, ledit lit de particules fines étant recyclé à travers ladite dispersion.

8

2. Le procédé de la revendication 1, dans lequel le fluide comprend un réactif gazeux.

3. Le procédé de la revendication 1, dans lequel le diamètre de l'orifice est notablement plus grand que le diamètre des particules grossières prises individuellement.

4. Le procédé de la revendication 1, dans lequel les particules grossières comprennent un matériau stable dans le processus d'agitation de gaz.

5. Le procédé de la revendication 2 pour faire réagir un matériau particulaire solide avec ledit réactif gazeux, suivant lequel

on introduit le réactif solide dans le réacteur à un taux prédéterminé,

on introduit le réactif gazeux à un taux établi en fonction dudit taux prédéterminé et de la stoechiométrie de la réaction.

6. Le procédé de la revendication 5, dans lequel le réactif solide est un combustible carboné.

7. Le procédé de la revendication 6, dans lequel ledit fluide est de l'air ou de l'oxygène, dans lequel le combustible est brûlé et la chaleur de combustion est récoltée en faisant passer un milieu de transfert de chaleur à travers des tubes de chaudière en contact avec les particules fines

8. Le procédé de la revendication 1 appliqué à la combustion ou à la gaséification, dans lequel les particules grossières comprenent un combustible carboné.

9. Le procédé de la revendication 8, dans lequel les particules grossières comprennent la houille, le coke ou les schistes bitumineux.

10. Procédé de mise en route d'un processus faisant intervenir un multisolide en agitation pour un fluide et comprenant des particules grossières et fines séparées sous forme de lite superposés, suviant lequel

(A) on forme un lit sédimenté de particules grossières dans un réacteur à agitation de gaz,

(B) on introduit un fluide par au moins un orifice dans le réacteur et on forme au moins un jet de fluide à travers ledit lit de particules grossières de manière à fournir une dispersion très diluée et non-uniforme de ces particules grossières,

(C) on forme un lit entraîné de particules fines, la dispersion des particules grossières étant incluse dans celui-ci, et

(D) on recircule les particules fines de ce lit entraîné à travers la dispersion de particules grossières.

11. Le procédé de la revendication 10, dans lequel les particules grossières comprennent principalement un matériau résistant à l'usure par abrasion lors du processus.

12. Le procédé de la revendication 11, dans lequel les particules grossières comprennent un combustible carboné.

13. Le procédé de la revendication 11, dans lequel les particules grossières comprennent de la houille, du coke ou des schistes bitumineux.

PRIOR ART

FIG. 1

FIG. 5

FIG. 6

0 077 294

*FIG. 2*   *FIG. 3*   *FIG. 4*